# EUROPÄISCHE PATENTANMELDUNG

(11) **EP 2 028 425 A2**
(43) Veröffentlichungstag der Anmeldung: **25.02.2009**
(21) Anmeldenummer: 08014475.1
(22) Anmeldetag: 14.08.2008
(51) Int. Cl.: F24D 3/14

(54) **Systemplatte zum Verlegen von Kunststoffrohren**

(30) Priorität: 21.08.2007 DE 102007039489
(71) Anmelder: Schütz GmbH & Co. KGaA, 56242 Selters / Westerwald (DE)
(72) Erfinder:
(74) Vertreter: Pürckhauer, Rolf

(57) **Zusammenfassung**

Gegenstand der Erfindung ist eine Systemplatte zum Verlegen von Kunststoffrohren der Heiz- beziehungsweise Kühlkreise von Flächen-Heiz- und Kühlinstallationen. Die Systemplatte (1) weist an der Plattenoberseite (3) angeformte Haltenocken (4) zum Verlegen der Kunststoffrohre (2) auf. Die Systemplatte (1) ist aus einem geschäumten Kunststoffmaterial (5) hergestellt, das im Bereich der rohrführenden Ebene (6-6) mit einem wärmeleitfähigen Material angereichert ist. Auf die Unterseite (7) der Systemplatte (1) ist eine Wärmeisolierung (8) aus einem Kunststoffmaterial mit einem hohen Wärmeleitwiderstand aufgebracht.

## Beschreibung

Die Erfindung betrifft eine Systemplatte zum Verlegen von Kunststoffrohren der Heiz- beziehungsweise Kühlkreise von Flächen-Heiz- und Kühlinstallationen.

Die DE 103 57 937 B4 beschreibt eine Systemplatte aus Kunststoff zum Verlegen von Kunststoffrohren der Heizbeziehungsweise Kühlkreise von Flächen-Heiz- und Kühlinstallationen, mit an die Plattenoberseite angeformten Haltenocken zum Fixieren der aufgelegten Wärmeleitlamellen aus Blechmaterial mit Rillen zur Aufnahme der Kunststoffrohre, wobei die Rillen entsprechend den durch das Raster der Haltnocken gebildeten Rohrlinien in die Wärmeleitlamellen eingeformt sind. Die Herstellung dieser bekannten Systemplatte ist aufwendig und dementsprechend teuer.

Der Erfindung liegt die Aufgabe zugrunde, eine Systemplatte zum Verlegen von Kunststoffrohren der Heiz- beziehungsweise Kühlkreise von Flächen-Heiz- und Kühlinstallationen zu entwickeln, die sich durch eine einfache Konstruktion und eine preisgünstige Herstellung auszeichnet.

Diese Aufgabe wird erfindungsgemäß gelöst durch eine Systemplatte mit den Merkmalen des Patentanspruchs 1.

Die Unteransprüche beinhalten vorteilhafte und zweckmäßige Weiterbildungen der neuen Systemplatte.

Die Herstellung der erfindungsgemäßen Systemplatte mit an die Plattenoberseite angeformten Haltenocken zum Verlegen der Kunststoffrohre für Flächen-Heiz- und Kühlinstallationen aus einem geschäumten Kunststoffmaterial, das im Bereich der rohrführenden Ebene der Systemplatte mit einem wärmeleitfähigen Material angereichert ist, wobei auf die Unterseite der Systemplatte eine Wärmeisolierschicht aufgebracht ist, ist gegenüber der bekannten Systemplatte wesentlich preisgünstiger. Die Verlegung der Heiz- beziehungsweise Kühlrohre zwischen den Haltenocken der aus einem geschäumten, mit einem wärmeleitfähigen Material angereicherten Kunststoffmaterial hergestellten Systemplatte ermöglicht die Bereitstellung von großen, gleichmäßig beheizbaren beziehungsweise kühlbaren Heizbeziehungsweise Kühlflächen, an denen auch bei einer dünnen Lastverteilschicht keine Temperaturwelligkeiten auftreten. Die Systemplatte gewährleistet einen niedrigen Energiebedarf und einen hohen Wirkungsgrad der Flächen-Heiz- und Kühlinstallationen. Durch den hohen Wärmeleitwiderstand der auf die Unterseite der Systemplatte aufgebrachten Wärmisolierschicht kann die Schichtdicke der Wärmedämmung, auf der die Systemplatte verlegt wird, gegenüber den bekannten Systemplatten wesentlich reduziert werden.

Die Erfindung ist nachstehend anhand von Zeichnungsfiguren erläutert, die folgendes darstellen:
- Fig. 1: eine ausschnittsweise Draufsicht einer als Fußboden-, Wand- oder Deckenplatte verlegbaren Systemplatte für die Heiz- beziehungsweise Kühlrohre von Flächen-Heiz- und Kühlinstallationen und
- Fig. 2: einen vergrößerten Teilquerschnitt der auf einem Fußboden eines Gebäudes verlegten Systemplatte nach Linie II-II der Figur 1.

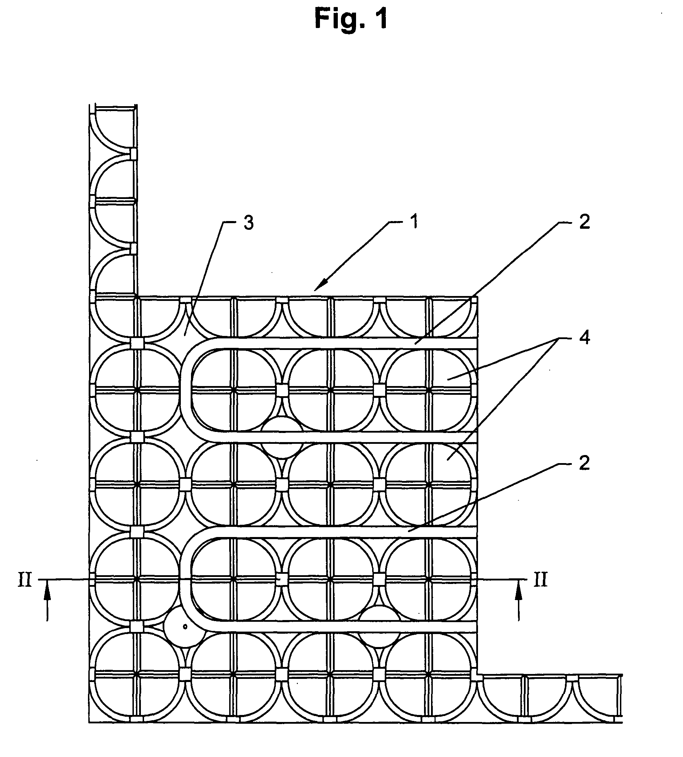

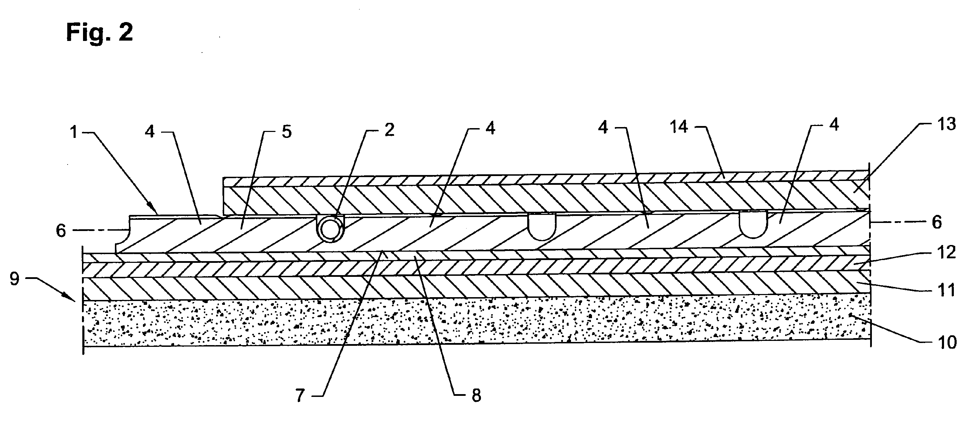

Die Systemplatte 1 nach den Figuren 1 und 2 zum Verlegen von Kunststoffrohren 2 der Heiz- beziehungsweise Kühlkreise einer Fußbodenheizung beziehungsweise Fußbodenkühlung für Gebäude weist an der Plattenoberseite 3 angeformte Haltenocken 4 zum Verlegen der Kunststoffrohre auf. Die Systemplatte 1 ist aus einem geschäumten Kunststoffmaterial 5 hergestellt, das im Bereich der rohrführenden Ebene 6-6 der Systemplatte mit einem wärmeleitfähigen Material, beispielsweise Graphit, angereichert ist. Auf die Unterseite 7 der Systemplatte 1 ist eine Wärmeisolierschicht 8 aus einem Kunststoffmaterial mit einem hohen Wärmeleitwiderstand aufgebracht.

Die Schemadarstellung nach Figur 2 zeigt die Verwendung der Systemplatte 1 für die Verlegung von Kunststoffrohren 2 einer Fußbodenheizung. Auf dem Rohbetonboden 10 eines Fußbodens 9 sind eine Trittschall- und Wärmedämmung 11 sowie Druckplatten 12 aufgebracht, auf denen Systemplatten 1 mit den Kunststoffrohren 2 eines Heizkreises verlegt sind. Auf den Systemplatten 1 sind Trockenestrichplatten 13 verlegt, auf denen einen Fliesenbelag 14 oder Teppichbodenbelag aufgebracht ist.

Die Systemplatte kann ferner für die Verlegung von Kunststoffrohren der Heiz- beziehungsweise Kühlkreise einer Wand- oder Deckenheizung beziehungsweise Kühlung für Gebäude eingesetzt werden.

### Bezugszeichen

- 1: Systemplatte
- 2: Kunststoffrohr
- 3: Oberseite von 1
- 4: Haltenocken
- 5: geschäumtes Kunststoffmaterial
- 6-6: rohrführende Ebene von 5
- 7: Unterseite von 1
- 8: Wärmeisolierschicht
- 9: Fußboden
- 10: Rohbetonboden von 9
- 11: Trittschall- und Wärmedämmung
- 12: Druckplatte
- 13: Trockenestrichplatte
- 14: Fliesenbelag

## Patentansprüche

1. Systemplatte zum Verlegen von Kunststoffrohren der Heizbeziehungsweise Kühlkreise von Flächen-Heiz- und Kühlinstallationen, **dadurch gekennzeichnet, dass** die Systemplatte (1) mit an die Plattenoberseite (3) angeformten Haltenocken (4) zum Verlegen der Kunststoffrohre (2) aus einem geschäumten Kunststoffmaterial (5) hergestellt ist, das im Bereich der rohrführenden Ebene (6-6) der Systemplatte (1) mit einem wärmeleitfähigen Material angereichert ist, und dass auf die Unterseite (7) der Systemplatte (1) eine Wärmeisolierschicht (8) aufgebracht ist.

2. Systemplatte nach Anspruch 1, **dadurch gekennzeichnet, dass** das geschäumte Kunststoffmaterial (5) der Systemplatte (1) Graphit als Wärmeleitmaterial enthält.

3. Systemplatte nach Anspruch 1 und 2, **gekennzeichnet durch** eine Verwendung zur Verlegung von Heiz- oder Kühlrohren (2) von Boden-, Wand- und Deckenheiz- und Kühlinstallationen für Gebäude.
